# FASCICULE DE BREVET EUROPEEN

(11) **EP 0 860 900 B1**
(45) Date de publication et mention de la délivrance du brevet: **04.09.2002**
(21) Numéro de dépôt: 98400327.7
(22) Date de dépôt: 12.02.1998
(51) Int. Cl.: H01R 4/64

(54) **Dispositif et procédé de mise à la masse de tresses de blindage de câbles blindés**
Verfahren und Vorrichtung zur Erdung der Beflechtung von abgeschirmten Kabeln
Device and process for mass connecting shielded cable braiding

(30) Priorité: 20.02.1997 FR 9702008
(43) Date de publication de la demande: 26.08.1998
(73) Titulaire: GEC ALSTHOM TRANSPORT SA, 75116 Paris (FR)
(72) Inventeur: Bouveret, Jean-Claude, 69100 Villeurbanne (FR); Sabatier, Jean, 69120 Vaulx en Velin (FR)
(74) Mandataire: Gosse, Michel

(56) Documents cités:
- US-A- 4 201 433
- US-A- 4 653 840
- US-A- 4 828 512
- PATENT ABSTRACTS OF JAPAN vol. 018, no. 155 (E-1524), 15 mars 1994 & JP 05 328573 A (MITSUBISHI ELECTRIC CORP), 10 décembre 1993,
- PATENT ABSTRACTS OF JAPAN vol. 017, no. 295 (E-1377), 7 juin 1993 & JP 05 021968 A (FUJITSU LTD), 29 janvier 1993,

## Description

La présente invention concerne les câbles blindés et la mise à la masse de leur tresses de blindage, en général, et porte, plus particulièrement, sur un dispositif et un procédé de mise à la masse de tresses de blindage de câbles blindés.

Par tresse de blindage de câbles blindés on entend dans la présente description tous moyens de blindage mis en oeuvre dans les câbles blindés.

Dans les dispositifs de mise à la masse de tresses de blindage de câbles blindés de l'art antérieur, chaque câble blindé a sa propre mise à la masse.

La mise à la masse de tresses de blindage de câbles blindés conformément à l'art antérieur connu est assurée par un fil cossé coté masse du châssis et thermosoudé coté multifilaire.

La liaison fil/blindage est réalisée au moyen d'un manchon auto-soudeur installé sur chaque blindage préalablement retroussé sur la gaine isolante du conducteur.

Dans certain mode de réalisation de l'art antérieur, le manchon auto-soudeur est remplacé par une ferrule sertissable ou par un clip ressort.

Conformément à un autre mode de réalisation de l'art antérieur, un système avec clips ressort sur une embase en acier inoxydable permet de maintenir et de raccorder les blindages de plusieurs multiconducteurs.

Ces dispositifs de mise à la masse de tresses de blindage de câbles blindés de l'art antérieur ont pour inconvénient de présenter une impédance de mise à la masse des tresses de blindage élevée, compte tenu des longueurs excessives, de l'utilisation de matériaux différents et de la faible section des liaisons filaires.

Il est connu, du document US-A-4 201 433, un dispositif de mise à la masse comportant un support connecté à la masse et présentant des alvéoles pour recevoir plusieurs câbles blindés. Toutefois, un tel dispositif présente l'inconvénient de posséder des alvéoles adaptées pour recevoir un diamètre de câble donné ce qui ne lui permet pas de reprendre les tresses de blindages de câbles de diamètres et de compositions différentes.

Aussi un but de l'invention est-il un dispositif et un procédé de mise à la masse de câbles blindés, permettant de diminuer de façon fiable et économique, l'impédance de connexion entre une masse et les tresses de blindage de câbles blindés.

Un autre but de l'invention est un dispositif et un procédé de mise à la masse de câbles blindés permettant de reprendre les tresses de blindages de câbles de diamètres et de compositions différentes.

Conformément à l'invention, le dispositif de mise à la masse de tresses de blindage de câbles blindés comporte un support présentant en partie supérieure une suite d'alvéoles susceptibles de recevoir les câbles blindés, le support recevant sur sa face supérieure un couvercle et se caractérise en ce qu'un joint déformable recouvert d'une gaine conductrice est disposé au fond du support, le couvercle maintenant en contact les tresses de blindages des câbles blindés avec la gaine conductrice de l'électricité.

Conformément à l'invention, le procédé de mise à la masse de tresses de blindage de câbles blindés, se caractérise en ce qu'il comporte les étapes suivantes:
- les câbles blindés monofilaire ou multifilaire sont dénudés de manière à laisser apparaître les conducteurs ainsi que les tresses de blindages,
- les tresses de blindages des câbles blindés sont retroussées sur la gaine isolante de leurs câbles blindés respectifs,
- un joint haute fréquence recouvert d'une gaine conductrice d'électricité est disposé au fond d'un support,
- les tresses de blindages des câbles blindés sont disposés dans des alvéoles et sont donc en contact avec la gaine conductrice de l'électricité du joint haute fréquence,
- un couvercle est fixé sur la face supérieure du support de manière à maintenir en contact les tresses de blindages des câbles blindés avec la gaine conductrice de 11 électricité du joint haute fréquence.

Le dispositif ou le procédé de l'invention satisfait également à l'une au moins des caractéristiques suivantes:
- ladite gaine conductrice de l'électricité du joint haute fréquence est une gaine maillée,
- ledit joint est élastique,
- lesdits matériaux électriquement conducteurs ont des revêtements homogènes,
- lesdits matériaux électriquement conducteurs de revêtements sont en cuivre étamé,
- lesdits câbles blindés dénudés sont pressés entre ledit couvercle et ladite gaine maillée conductrice de l'électricité dudit joint haute fréquence,
- ledit support et ledit couvercle sont en un matériau isolant électrique.

Un avantage du dispositif et du procédé de mise à la masse de tresses de blindage de câbles blindés de l'invention est une mise à la masse simultanée et très compacte de plusieurs câbles blindés.

Un autre avantage du dispositif et du procédé de mise à la masse de tresses de blindage de câbles blindés de l'invention est de permettre de reprendre les tresses de blindages de câbles de diamètres et de compositions différentes.

Un autre avantage du dispositif et du procédé de mise à la masse de tresses de blindage de câbles blindés de l'invention est une impédance de mise à la masse nettement moindre, améliorant considérablement le comportement aux exigences CEM.

Un autre avantage du dispositif et du procédé de mise à la masse de tresses de blindage de câbles blindés de l'invention est un temps de mise en oeuvre moindre.

Un autre avantage du dispositif et du procédé de mise à la masse de tresses de blindage de câbles blindés de l'invention est un nombre de pièces élémentaires minimum.

Un autre avantage du dispositif et du procédé de mise à la masse de tresses de blindage de câbles blindés de l'invention est de pouvoir s'appliquer pour tous les problèmes de mise à la masse, par exemple dans les équipements de traction ou dans le domaine des circuits informatiques embarqués.

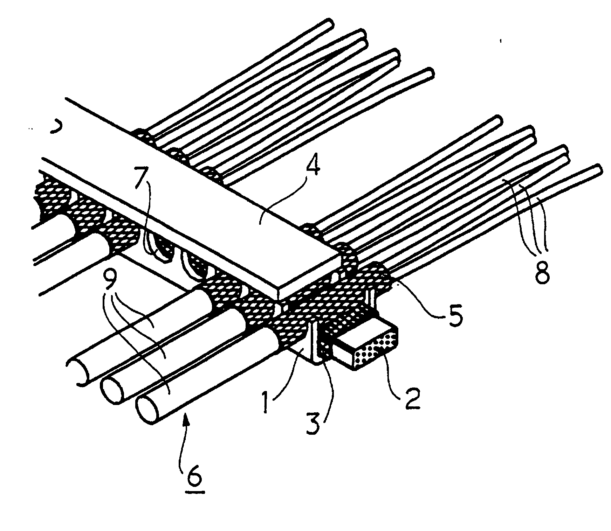

D'autres buts, caractéristiques et avantages de l'invention apparaîtront à la lecture de la description du mode de réalisation préféré du dispositif et du procédé de mise à la masse de tresses de blindage de câbles blindés, description faite en liaison avec les dessins dans lesquels la figure unique est une vue générale d'un dispositif de mise à la masse de tresses de blindage de câbles blindés conforme à l'invention.

Le dispositif de mise à la masse de tresses de blindage 5 de câbles blindés 6 conformément au mode de réalisation préféré représenté à la figure unique comporte un support conducteur 1 longitudinal dont la section radiale est en forme générale de U au fond duquel est disposé un joint 2 recouvert d'une gaine maillée 3 conductrice de l'électricité, le support conducteur 1 étant susceptible de recevoir sur sa face supérieure un couvercle conducteur 4.

Le joint 2 recouvert de la gaine maillée 3 conductrice de l'électricité constituent un joint haute fréquence.

De tels joints haute fréquence sont, par exemple, vendus par la société JACQUES DUBOIS sous la dénomination "joints linéaires TRICAT".

Le support conducteur 1 comporte en partie supérieure une suite d'alvéoles 7 susceptibles de recevoir les câbles blindés 6.

Conformément au procédé de l'invention, les câbles blindés 6 monofilaire ou multifilaire sont dénudés de manière à laisser apparaître les conducteurs 8 ainsi que les tresses de blindages 5.

Les tresses de blindages 5 des câbles blindés 6 sont, de préférence, retroussées sur la gaine isolante 9 de leurs câblés blindés respectifs.

Un joint haute fréquence est disposé au fond du support conducteur 1.

Les tresses de blindages 5 des câbles blindés 6 sont disposés dans les d'alvéoles 7 et sont donc en contact avec la gaine maillée 3 conductrice de l'électricité du joint haute fréquence.

Enfin, un couvercle conducteur 4 est fixé sur la face supérieure du support conducteur 1 de manière à maintenir en contact les tresses de blindages 5 des câbles blindés 6 avec la gaine maillée 3 conductrice de l'électricité du joint haute fréquence.

Dans ce mode de réalisation, la mise à la masse des tresses de blindages 5 nécessite, par exemple, la mise à la masse du support 1 conducteur de l'électricité.

Conformément à un autre mode de réalisation, le support 1 et le couvercle 4 sont en un matériau isolant électrique.

Dans un tel mode de réalisation, la mise à la masse des tresses de blindages 5 nécessite la mise à la masse de la gaine maillée 3 conductrice de l'électricité du joint haute fréquence.

Quel que soit le mode de réalisation, le joint 2 a une section quelconque, par exemple carrée, rectangulaire, circulaire ou ovale.

Les matériaux électriquement conducteurs ont des revêtements homogènes et sont par exemple en cuivre étamé.

Les câbles blindés dénudés dont les tresses de blindage sont mises à la masse conformément au procédé de mise à la masse de tresses de blindage de l'invention sont pressés entre le couvercle et le joint recouvert d'une gaine maillée disposé dans le support.

La pression de l'ensemble est assuré par vissage du couvercle sur le support.

Le maintien des efforts de pression entre les tresses de blindage des câbles blindés dénudés et la gaine maillée du joint haute fréquence est assuré par l'élasticité du joint haute fréquence.

L'utilisation d'un support comportant une suite d'alvéoles a pour avantage de limiter le fluage du joint haute fréquence.

La qualité des contacts électriques est assurée par La compatibilité des revêtements de protection des pièces conductrices.

Le dispositif de mise à la masse de tresses de blindage de câbles blindés est relié à la masse d'un châssis par fixation directe sur le châssis.

## Revendications

1. Dispositif de mise à la masse de tresses de blindage (5) de câbles blindés (6) comportant un support (1) présentant en partie supérieure une suite d'alvéoles (7) susceptibles de recevoir les câbles blindés (6), le support (1) recevant sur sa face supérieure un couvercle (4), **caractérisé en ce qu'**un joint (2) déformable recouvert d'une gaine (3) conductrice de l'électricité est disposé au fond dudit support (1), ledit couvercle (4) maintenant en contact les tresses de blindages (5) des câbles blindés (6) avec la gaine (3) conductrice de l'électricité.

2. Procédé de mise à la masse de tresses de blindage (5) de câbles blindés (6), lesdits câbles blindés comportant une gaine isolante (9), **caractérisé en ce qu'**il comporte les étapes suivantes:
- les câbles blindés (6) monofilaire ou multifilaire sont dénudés de manière à laisser apparaître les conducteurs (8) ainsi que les tresses de blindages (5),
- les tresses de blindages (5) des câbles blindés (6) sont retroussées sur la gaine isolante (9) de leurs câbles blindés respectifs,
- un joint haute fréquence (2) recouvert d'une gaine (3) conductrice d'électricité est disposé au fond d'un support (1),
- les tresses de blindages (5) des câbles blindés (6) sont disposés dans des alvéoles (7) et sont donc en contact avec la gaine (3) conductrice de l'électricité du joint haute fréquence (2),
- un couvercle (4) est fixé sur la face supérieure du support (1) de manière à maintenir en contact les tresses de blindages (5) des câbles blindés (6) avec la gaine (3) conductrice de l'électricité du joint haute fréquence (2).

3. Dispositif ou procédé selon l'une quelconque des revendications 1 ou 2, dans lequel ladite gaine (3) conductrice de l'électricité du joint haute fréquence (2) est une gaine maillée.

4. Dispositif ou procédé selon l'une quelconque des revendications 1 à 3, dans lequel ledit joint (2) est élastique.

5. Dispositif ou procédé selon l'une quelconque des revendications 1 à 4, dans lequel lesdits matériaux électriquement conducteurs ont des revêtements homogènes.

6. Dispositif ou procédé selon la revendication 5, dans lequel lesdits matériaux électriquement conducteurs de revêtements sont en cuivre étamé.

7. Procédé selon la revendication 2, dans lequel lesdits câbles blindés (6) dénudés sont pressés entre ledit couvercle (4) et ladite gaine maillée (3) conductrice de l'électricité dudit joint haute fréquence (2).

8. Dispositif ou procédé selon l'une quelconque des revendications 1 à 7, dans lequel ledit support (1) et ledit couvercle (4) sont en un matériau isolant électrique.

## Patentansprüche

1. Vorrichtung zur Erdung der Beflechtungen (5) von abgeschirmten Kabeln (6), welche einen Träger (1) umfasst, der im oberen Teil eine Folge von Steckhülsen (7) aufweist, welche geeignet sind die abgeschirmten Kabel (6) aufzunehmen, wobei der Träger (1) auf seiner Oberseite einen Deckel (4) aufnimmt, **dadurch gekennzeichnet, dass** eine von einer elektrisch leitenden Hülle (3) bedeckte deformierbare Dichtung (2) auf dem Boden des Trägers (1) angeordnet ist, wobei der Deckel (4) die Beflechtungen (5) der abgeschirmten Kabel (6) in Kontakt mit der elektrisch leitenden Hülle (3) hält.

2. Verfahren zur Erdung der Beflechtungen (5) von abgeschirmten Kabeln (6), wobei die abgeschirmten Kabel eine isolierende Hülle (9) aufweisen, **dadurch gekennzeichnet, dass** es die folgenden Schritte umfasst:
- die abgeschirmten eindrahtigen oder mehrdrahtigen Kabel (6) werden freigelegt, derart dass die Leiter (8) sowie die Beflechtungen (5) erscheinen,
- die Beflechtungen (5) der abgeschirmten Kabel (6) werden auf die isolierende Hülle (9) ihrer jeweiligen abgeschirmten Kabel umgeschlagen,
- eine von einer elektrisch leitfähigen Hülle (3) bedeckte Hochfrequenzdichtung (2) wird auf dem Boden eines Trägers (1) angeordnet,
- die Beflechtungen (5) der abgeschirmten Kabel (6) werden in den Steckhülsen (7) angeordnet und sind somit in Kontakt mit der elektrisch leitfähigen Hülle (3) der Hochfrequenzdichtung (2),
- ein Deckel (4) wird auf der Oberseite des Trägers (1) befestigt, derart, dass die Beflechtungen (5) der abgeschirmten Kabel (6) in Kontakt mit der elektrisch leitenden Hülle (3) der Hochfrequenzdichtung (2) gehalten werden.

3. Vorrichtung oder Verfahren nach einem der Ansprüche 1 oder 2, wobei die elektrisch leitende Hülle (3) der Hochfrequenzdichtung (2) eine Maschenhülle ist.

4. Vorrichtung oder Verfahren nach einem der Ansprüche 1 bis 3, wobei die Dichtung (2) elastisch ist.

5. Vorrichtung oder Verfahren nach einem der Ansprüche 1 bis 4, wobei die elektrisch leitenden Materialien homogene Ummantelungen aufweisen.

6. Vorrichtung oder Verfahren nach Anspruch 5, wobei die ummantelten elektrisch leitenden Materialien aus verzinntem Kupfer bestehen.

7. Verfahren nach Anspruch 2, bei welchem die freigelegten abgeschirmten Kabel (6) zwischen dem Deckel (4) und der elektrisch leitenden Maschenhülle der Hochfrequenzdichtung (2) geklemmt sind.

8. Vorrichtung oder Verfahren nach einem der Ansprüche 1 bis 7, wobei der Träger (1) und der Deckel (4) aus einem elektrisch isolierenden Material bestehen.

## Claims

1. A device for grounding shielding braids (5) of shielded cables (6), the device comprising a support (1) having, in the upper portion thereof, a series of holes (7) suitable for receiving the shielded cables (6), the support (1) receiving a cover on the top face thereof, the device being **characterized in that** a deformable gasket (2) covered in an electrically conductive sheath (3) is disposed in the bottom of said support (1), said cover (4) holding the shielding braids (5) of the shielded cables (6) in contact with the electrically conductive sheath (3).

2. A method of grounding shielding braids (5) of shielded cables (6), said shielded cables including an insulating sheath (9), the method being **characterized in that** it comprises the following steps:
the mono-filament or multi-filament shielded cables (6) are stripped so as to reveal the conductors (8) and the shielding braids (5);
the shielding braids (5) of the shielded cables (6) are turned back onto the insulating sheaths (9) of their respective shielded cables;
a high frequency gasket (2) covered in an electrically conductive sheath is disposed in the bottom of a support (1);
the shielding braids (5) of the shielded cables (6) are disposed in the holes (7) and are thus in contact with the electrically conductive sheath (3) of the high frequency gasket (2); and
a cover (4) is fixed on the top face of the support (1) so as to hold the shielding braids (5) of the shielded cables (6) in contact with the electrically conductive sheath (3) of the high frequency gasket (2).

3. A device or method according to claim 1 or 2, in which said electrically conductive sheath (3) of the high frequency gasket (2) is a meshed sheath.

4. A device or method according to any one of claims 1 to 3, in which said gasket (2) is resilient.

5. A device or method according to any one of claims 1 to 4, in which said electrically conductive materials have uniform coverings.

6. A device or method according to claim 5, in which said electrically conductive covering materials are made of tinned copper.

7. A method according to claim 2, in which said stripped shielded cables (6) are pressed between said cover (4) and said electrically conductive meshed sheath (3) of said high frequency gasket (2).

8. A device or method according to any one of claims 1 to 7, in which said support (1) and said cover (4) are made of electrically insulating material.
